# EUROPEAN PATENT APPLICATION

(11) **EP 0 711 650 A1**
(43) Date of publication of application: **15.05.1996**
(21) Application number: 95308081.9
(22) Date of filing: 13.11.1995
(51) Int. Cl.: B29C 65/54

(54) **Solvent bonding**

(30) Priority: 11.11.1994 GB 9422783
(71) Applicant: ROTALAC PLASTICS LIMITED, Altrincham, Cheshire WA14 1TB (GB)
(72) Inventor: Black, Edmund Warwick, Stockport, Cheshire SK6 6JY (GB)
(74) Representative: Madeley, June Margaret

(57) **Abstract**

A method of solvent bonding surfaces together may be employed to secure cap (10) in tube (1). The method involves providing a channel (17) in a first surface (13) and an aperture (5) in a second surface (3). The cap (10) and tube (1) are brought together in such a way that the cap (10) is a snug fit in the tube (1). The close fitting opposed surfaces (3, 13) define an interface or a capillary gap between them for receipt of solvent. Solvent is injected into aperture (5) and thus into channel (17) and to extend beyond the width of the channel (17) by capillary action. When dried, the solvent provides an effective seal at this interface. The method allows for surfaces of components to be arranged in the desired mating relationship prior to application of the solvent. An example method is used to construct a cartridge for a toner composition to be used in a photocopier machine. Both components are made of compatible plastics to facilitate recycling.

## Description

The present invention relates to methods of bonding components together to produce articles and bonded articles produced by such methods.

Problems arise in securing surfaces of components together to provide an effective seal between them. Often, in cases where an effective seal is essential, the components are constructed to provide respective surfaces which mate very closely together to provide an interface. Adhesive is applied at the interface to bond the surfaces of the components together. To achieve this, typically adhesive must be applied at either one or both of the surfaces and the components subsequently brought together in mating relationship and retained in a desired configuration until the adhesive has taken effect. In cases where the components are of plastics, for example, the adhesive may take the form of a solvent which is capable of dissolving the plastics so as to adhere the components together.

Difficulties arise with the above techniques. In particular, it can be troublesome to arrange the components having adhesive applied thereto in the desired configuration, with their surfaces in mating relationship, especially if the components are a close fit together even prior to receiving adhesive. Also, if the adhesive is of a type which cures slowly, it can be difficult to retain the components in the appropriate configuration for sufficient time to allow the adhesive to take effect. Conversely, if the adhesive is of a type which bonds in a very short time, little time is allowed for adjustment of the relative positions of the components to bring them into the desired relationship. Furthermore, in the case of solvent bonding, difficulties can arise in handling the solvent and, in particular, it is undesirable to allow potentially toxic solvent vapour into the atmosphere.

The present invention recognises and seeks to alleviate at least some of the aforementioned problems.

Accordingly, in one broad aspect the present invention provides a method of solvent bonding first and second surfaces together, which method comprises providing a channel for solvent in one said surface and a solvent inlet in the one or other surface, mating the surfaces together with the inlet in communication with the channel, and otherwise to enclose and provide an interface about the channel, and supplying solvent through the inlet to the channel so that it extends over the interface by capillary action to adhere the surfaces together.

The present method thus provides a channel for the solvent adhesive which, when the two surfaces are mated together, is substantially closed, other than at the region of the inlet. In this way, the solvent may be enclosed and undesirable contamination of the environment avoided. In especially preferred embodiments formations are provided to present a boundary to the interface and to further inhibit undesirable release of solvent into the atmosphere.

The present method involves providing at least one solvent inlet in one or both surfaces, the or each inlet being arranged to communicate with the channel for receiving solvent adhesive to facilitate supply of solvent to the channel. Suitably, an opening is in the form of an aperture in the first surface or in the other surface.

In order to enable the solvent to extend into the interface by capillary action it is necessary to mate the two surfaces together so that they are a tight fit with a small spacing or capillary gap between them. It will be appreciated that the appropriate spacing may vary in accordance with the nature of material and shape of the components. Suitable example spacings are of the order of fractions of millimetres, such as between about 0.05 and 0.25mm. Generally, the surfaces of the components will be substantially smooth in the region of the interface. Surface formations may be permitted provided they do not unduly inhibit the capillary action.

Suitable channels also have a depth and width of the order of millimetres and fractions tnereof. Suitably the channel has greater width than depth. In preferred embodiments the channel may have a width of between about 1mm to 2mm, especially about 1.5mm and a depth of between about 0.2 to 1mm, particularly about 0.5mm.

Solvent is preferably supplied into the channel under pressure. The appropriate conditions for supply of the solvent may vary in dependence upon the extent of the channel and viscosity of the solvent, for example. Most preferably the pressure level is sufficient to extend the solvent along the channel. Thereafter capillary action will be sufficient to enable the solvent to spread beyond the channel over the interface. Example conditions are about 5-10psi.

Preferred embodiments of the present invention involve injecting the solvent into the or each solvent inlet under pressure, such as outlined above. Most preferably the method involves injecting a predetermined dose of solvent into the or each inlet. In this way the required dose of solvent may be selected in advance and employed, so as to avoid wastage of solvent and also to limit potential environmental hazards.

The present invention is particularly applicable to form-sustaining materials, such as plastics, which may be machined or moulded to provide appropriate channels and apertures. In preferred embodiments, the method involves bonding surfaces of components of compatible plastics, particularly using an adhesive which is a solvent for both plastics. Preferably, the plastics comprise polymers of the same or similar monomer units, optionally with different additives such as colour pigments. Example plastics include styrene polymers. The use of components of compatible plastics is particularly desirable in that it facilitates recycling of the component materials, where appropriate.

It is a particularly advantageous feature of the present invention that it permits the surfaces of components to be arranged in the desired mating relationship prior to application of solvent. The present invention is especially applicable to components which are constructed to nest or fit very closely one within the other and for which solvent is required to provide a seal between them. The present method is thus especially suitable for securing together respective external and internal surfaces of components which are locatable one inside the other. In this regard, in preferred embodiments the present method involves bonding components which are locatable one inside the other with a capillary gap between them, a channel for solvent being provided in the capillary gap.

Embodiments of the present invention allow for effective bonding of opposed surfaces of generally cylindrical components. Suitably the cylindrical components are locatable one inside the other as aforesaid and an external surface of the inner component or an internal surface of the outer component is provided with an essentially annular channel for the solvent. Either component may be provided with a solvent inlet, suitably in the form of an aperture. Preferably, one or both of the components is provided with formations to limit the extend to which solvent will extend beyond the channel. This may assist in retaining solvent and to reduce potential environmental hazards. In this respect, preferably one of the components is provided with a radially extending flange arranged to abut the other component to provide a boundary for the capillary gap and thereby retain solvent within that gap.

In another aspect the present invention provides a process for producing an article from components bonded together at respective surfaces, the process comprising providing a channel for solvent in a surface of a first component and an inlet for solvent through the surface of the first or another component to communicate with the channel, mating the surfaces of the respective components together with a capillary gap between them to provide an interface about the channel, supplying solvent through the inlet to the channel so that it extends into the interface by capillary action, and allowing the solvent to adhere the surfaces of the components together. Preferred embodiments in accordance with this aspect may be comparable to the embodiments discussed above in relation to the first aspect.

In yet another broad aspect the present invention provides a process for producing an article from components bonded together for which one of the components has a surface provided with a channel and one of the components has a solvent inlet capable of communicating with the channel to supply solvent thereto, the process comprising locating the components in mating relationship to provide a capillary gap between them, supplying adhesive to the channel so that it extends into the gap by capillary action, and retaining the components in the mating relationship at least until the solvent forms a seal between them.

In a further broad aspect the invention concerns a set of components for use in a bonding method as aforesaid, the set comprising a first component having a channel in a surface and a second component having a surface, at least one of the surfaces being provided with a solvent inlet, the components capable of being brought together in mating relationship with the respective surfaces facing one another so as to define a capillary gap for adhesive between them in which the channel of the first component communicates with the solvent inlet of the first or second component.

In particularly preferred embodiments the set of components are securable to provide a cartridge for toner compositions for use in photocopying apparatus. Preferably the components are constructed of compatible plastics materials which need not be separated for recycling purposes. Example preferred components are constructed of styrene polymers. Such components also have the advantage that, when used to accommodate styrene based toners, the empty cartridge need not be cleared of residue toner prior to the recycling operation.

Embodiments of the present invention will now be described further, by way of example, with reference to the accompanying drawing.

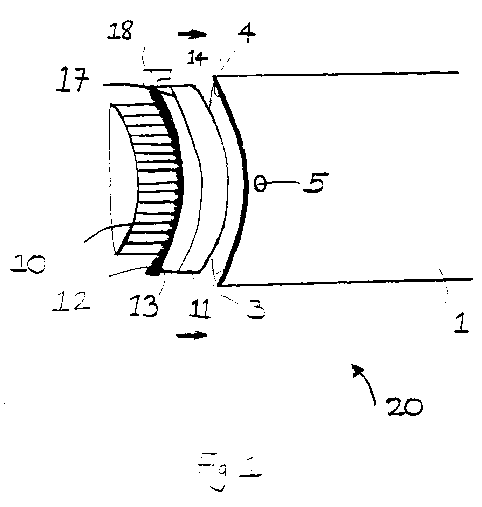

Turning to Fig. 1, this illustrates an example article for bonding in accordance with the present method, namely a toner cartridge for use in a photocopier. The cartridge 20 comprises a generally cylindrical hollow tube 1 and cap 10. It will be appreciated that, in such articles and applications, it is important to provide an effective seal between the tube and cap to inhibit inadvertent release of the very fine toner particles through the seal.

Toner cartridges currently in use typically comprise a cardboard tube closed with a plastic cap which nests inside the tube. In order to secure the cap and tube together, in prior techniques adhesive is applied to the edge of the cap which, in use, will be accommodated in the tube. The cap is subsequently pushed into position in the tube and the adhesive allowed to take effect. Typically, a water based adhesive is employed to secure the two components together, which can cause some undesirable expansion of the cardboard based tube. These are disadvantages of present toner cartridges and their associated bonding methods. Also, problems arise in recycling the toner cartridges when two different materials are employed. It is time consuming to separate the cardboard and plastic for appropriate recycling.

In view of the above problems it would be desirable to manufacture toner cartridges using compatible materials for the tube and cap and which need not be separated for recycling. To this end it would be desirable to manufacture both the tube and cap from plastics. However, in such circumstances difficulties arise in bonding the tube and cap together. Sonic welding may be employed but it is generally difficult to obtain a sufficient seal in this way. Also, the use of solvent bonding is thought to be generally disadvantageous. In particular, the time taken to apply solvent to the appropriate surfaces of the components and then to mate the surfaces together would result in undesirable exposure to the potentially hazardous solvent. For this reason, solvent bonding is now discouraged in such fields. The following example of the bonding method of the present invention addresses such problems.

Returning to Fig. 1, this shows a first component of the proposed toner cartridge 20, namely a generally cylindrical polystyrene cap 10. The second component is a tube of a compatible plastics, namely a hollow polystyrene tube 1. The tube is also generally cylindrical, closed at one end (not illustrated) and open at its other end 4 to receive the cap 10. The cap 10 includes a depending flange or skirt 11 which, in use, is retained inside the tube 1. The skirt 11 typically tapers slightly towards its free end 14 to facilitate insertion of the cap 10 into the open end 4 of the tube. The cap 10 also has a radially extending flange 12 which, in use, will rest on end 4 of the tube 1.

The skirt 11 which is to be retained in the tube 1 when the cap flange 12 rests on tube end 4 defines a first annular external surface 13. The internal surface of the tube 1, at or near its free end 4, defines a second surface 3. When the cap 10 is inserted into the tube 1, the two surfaces 3 and 13 mate together to provide an interface or capillary gap between them.

The cap 10 and tube 1 are of matching cross sectional shape and the external dimensions of the cap 10 and the internal dimensions of the tube 1 are appropriately selected so that the cap 10 is a very snug fit in tube 1 to provide the capillary gap. Suitably, the tube has an inside diameter of about 0.1 to 0.15 mm greater than the external diameter of flange 11 of cap 10.

The cap 10 is machined (or alternatively moulded) to provide an annular channel 17 around its periphery on the skirt 11 and thus surface 13. Suitably the channel 17 is effectively continuous, extending as far as possible over the full circumference of the cap 10. An example channel would be about 0.5 mm in depth and 1.5 mm wide. In use, the channel 17 will be accommodated in the tube 1, alongside its internal surface 3.

The tube 1 is also machined (or premoulded) with one or more openings 5. Opening 5 is arranged to communicate with the channel 17 of the cap 10, when the cap 10 is accommodated in tube 1. The opening or aperture 5 is provided to supply solvent to the channel 17.

The illustration also shows the provision of formations on the cap 10 or tube 1 to assist in locating the components together in the desired configuration. In the illustrated embodiment, the cap 10 is provided with a protrusion which provides a depending lip 18 for abutting the external surface of the tube 1 at its free end 4.

In use, the cap 10 is snugly accommodated in tube 1, with the skirt 11 and its external surface 13 abutting the internal surface 3 of the tube 1. The aperture 5 exposes a portion of channel 17. The close fitting opposed surfaces 3 and 13 define a capillary gap for receipt of adhesive. The radially extending flange 13 on the cap 10 also presents a boundary to inhibit release of solvent into the atmosphere.

Adhesive which is a solvent for polystyrene, such as methyl ethyl ketone, is injected under a pressure of about 5 to 10psi at a predetermined dosage into aperture 5 and thus into channel 17. The solvent runs along channel 17 and also extends beyond the width of the channel 17 over the interface between surfaces 3 and 13 by capillary action. The solvent, which dries within seconds, provides an effective seal over this interface and around the entire periphery of the cap.

It will be appreciated that in this process the channel 17 for receiving solvent is substantially closed, other than in the region of aperture 5. Thus, potential leakage of solvent vapour into the atmosphere is substantially reduced as compared to prior techniques which involve exposure of large surface areas of solvent. Also, injection apparatus may be selected with an appropriate nozzle which forms a seal about aperture 5 to prevent leakage of vapour into the atmosphere.

As a precaution, the present process could be conducted in a closed chamber or perhaps under an extraction hood to prevent leaked solvent presenting a hazard to the workforce. In this respect, it is also recognised that this process may be readily automated, so that the mating of components and supply of adhesive may be effected by remote control This is also advantageous in terms of safety of the workforce and in terms of operating efficiency.

It will also, of course be appreciated that various modifications may be made to the illustrated embodiment. For example, the present invention is applicable to components of various shapes and is not limited to use with generally cylindrical parts. Also, in principle the surfaces for bonding need not be provided on different components. Rather, they may be spaced surfaces on a single component capable of being brought together in mating relationship. Similarly, the process is applicable for bonding more than two components or surfaces together ae desired.

Furthermore, in contrast to the illustrated embodiment, the channel for adhesive may be provided on an internal surface of a component. For example, the illustrated cartridge may be modified so that the internal surface of the cap is secured to the external surface of the tube. In such circumstances either the external surface of the tube or the internal surface of the cap may be provided with a channel. Similarly, an aperture may be provided in either the tube or the cap. The appropriate choice may depend on relative ease of manufacture of the alternatives.

## Claims

1. A method of solvent bonding first and second surfaces (13,3) together, which method comprises providing a channel (17) for solvent in one surface (13) and a solvent inlet (5) through the first or second surtace (3, 13), mating the surfaces (3, 13) together with the inlet (5) in communication with the channel (17) and otherwise to close the channel (17) and to provide an interface about the channel (17), and supplying solvent to the channel (17) through the inlet (5) so that it extends over the interface by capillary action to adhere the surfaces together.

2. A method according to Claim 1 wherein a solvent inlet is in the form of an aperture (5) in the first surface (13) or in the other surface (3).

3. A method according to Claim 1 or Claim 2 which includes supplying solvent into the channel (17) through inlet (5) under pressure.

4. A method according to any preceding claim which includes supplying a predetermined dose of solvent to the channel (17).

5. A process for producing an article (20) from components (1, 10) bonded together wherein one of the components (10) has a surface (13) provided with a channel (17) and at least one of the components (1, 10) has a surface (3, 13) with a solvent inlet (5) capable of communicating with channel (17) the process comprising locating the components (1, 10) in mating relationship to substantially close the channel (17) and to provide an interface between the surfaces (3, 13), supplying solvent to the channel (17) so that it extends into the interface by capillary action, and retaining the components (1, 10) in the mating relationship at least until the solvent forms a seal between them.

6. A process according to claim 5 wherein the components (1, 10) are locatable one inside the other in mating relationship and wherein a boundary is provided for the interface to inhibit release of solvent externally of the article (20).

7. A process according to claim 6 wherein a boundary is provided by surface formations (4,8) on one or more components (1, 10).

8. A set of components for use in a bonding method as claimed in any one of claims 1 to 4, the set comprising at least a first component (10) having a channel (17) in a surface (13) and a second component (1) having a surface (3), at least one of the surfaces (3, 13) having a solvent inlet (5), the components (1, 10) being capable of being brought together in mating relationship with the respective surfaces (3, 13) facing one another and the channel (17) communicating with the solvent inlet (5) and so as to define a capillary gap for solvent between the surfaces (3, 13) and about the channel (17).

9. A set according to claim 8 wherein the first and second components (1, 10) have formations (4, 18) to assist in locating the components (1, 10) together in a desired configuration with the respective surfaces in mating relation.

10. A set according to claim 8 or 9 wherein the first and second components (1, 10) comprise compatible plastics materials capable of undergoing a recycling process without the need for separation.
